# EUROPEAN PATENT SPECIFICATION

(11) **EP 3 761 129 B1**
(45) Date of publication and mention of the grant of the patent: **13.08.2025**
(21) Application number: 20180936.5
(22) Date of filing: 18.06.2020
(51) Int. Cl.: G05B 19/4099, F01D 5/14, F01D 5/18, B22C 9/04, B22D 31/00, B22D 46/00, B22D 47/00, B23H 7/26, B23H 9/10, B23P 15/02

(54) **MANUFACTURING AIRFOIL WITH ROUNDED TRAILING EDGE**
HERSTELLUNG EINES TRAGFLÜGELS MIT ABGERUNDETER HINTERKANTE
FABRICATION SURFACE PORTANTE DOTÉE D'UN ARRONDI DE BORD DE FUITE

(30) Priority: 02.07.2019 US 201916460742
(43) Date of publication of application: 06.01.2021
(73) Proprietor: RTX Corporation, Farmington, CT 06032 (US)
(72) Inventor: AUXIER, James Tilsley, Bloomfield, 06002 (US); BARRON, Alan C., Jupiter, FL Florida 33458 (US); COFALKA, Norman W., Lewes, DE Delaware 19958 (US)
(74) Representative: Dehns

(56) References cited:
- WO-A1-2018/132629
- US-A1- 2015 081 074

## Description

### BACKGROUND

Exemplary embodiments of the present disclosure relate generally to airfoils and, in one embodiment, to methods of manufacturing tairfoils with rounded trailing edges.

Airfoils are present in many aerodynamic applications including, but not limited to, turbines of gas turbine engines. These turbine airfoils each have a root, a tip, pressure and suction surfaces that extend from root to tip and leading and trailing edges at leading and trailing sides of the pressure and suction surfaces. In a turbine, the turbine airfoils can aerodynamically interact with high temperature and high pressure fluids to cause a rotor to rotate.

In cascade testing, it has been shown that turbine airfoils having rounded trailing edges reduce unsteady mixing effects and increase thermodynamic efficiency as compared to turbine airfoils that have squared trailing edges. The turbine airfoils with the rounded trailing edges achieve this effect by creating a wake effect. Even if these turbine airfoils have relatively large trailing edge diameters, the wake effect is similar to what would be produced by a turbine airfoil having a trailing edge with a relatively small trailing edge diameter.

Rounded profiles on trailing edges can be difficult to produce, however, and typically have only been producible on uncooled airfoils due to the need for a core printout from the trailing edge of a cooled airfoil resulting from investment casting processes. As such, a center-discharge airfoil thus often has an extended length that must be trimmed back, and a pressure side-discharge airfoil thus also has an encapsulation that must also be removed. This trimming is typically done manually to a witness line with belt grinders and hand-held rotary grinders, leaving sharp corners with only de-burring applied.

While certain machining processes, such as CNC, would be an approach to automate the process of trimming back the extended length of an airfoil, rigidly-programmed toolpaths (even with offsets) are insufficiently capable of accounting for variabilities in part-to-part shapes that are inherent in investment casting processes and it quickly becomes cost-prohibitive to inspect and program bespoke CNC code for each casting. Likewise, pre-fab electro-dynamic machining (EDM) and electro-chemical machining (ECM) electrodes covering the entire trailing edge are often unable to account for the casting variabilities. Pressure-sensitive robotic deburring has been attempted, but it does not have the necessary cutting power required to perform trailing edge finishing from a rough cast state, and the multiple degrees of freedom (DOF) in robotic arm articulation introduces more variation than desired.

US 2015/081074 and WO 2018/132629 disclose adaptive machining methods for correcting the form of an as-cast airfoil including generating a number of measured data points along the surface of the trailing edge of the as-cast airfoil, comparing these measured data points to nominal data points, and machining the as-cast airfoil along a maching path generated from the differences in the measured and nominal data points.

### BRIEF DESCRIPTION

According to an aspect of the disclosure, a method of manufacturing an aerodynamic element with an edge is provided as described in claim 1. The aerodynamic element may include a turbine airfoil having a root and a tip, pressure and suction surfaces extending from the root to the tip.

The aerodynamic element may include a ceramic core.

The cutting machine may include one or more of a CNC machine, a ball endmill, an electro-dynamic machining (EDM) electrode and an electro-chemical machining (ECM) electrode.

The method may further include feeding cutting fluid through the aerodynamic element during the driving.

The predefined number of data points may be three.

The cutting toolpaths adapted toward correcting the as cast condition may be defined along one or more of radial, axial and circumferential dimensions.

Each of the cutting toolpaths adapted toward correcting the as cast condition may include one or more passes on each side of the trailing edge such that the trailing edge has a curvature at each side thereof.

The curvature at each side may be one or more of: one or more of spherical, elliptical and complex, and variable along one or more of radial, axial and circumferential dimensions.

According to another aspect of the disclosure, a manufacturing machine for manufacturing an aerodynamic element is provided as described in claim 10.

These and other advantages and features will become more apparent from the following description taken in conjunction with the drawings.

### BRIEF DESCRIPTION OF THE DRAWINGS

The following descriptions should not be considered limiting but are provided by way of example only. With reference to the accompanying drawings, like elements are numbered alike:
FIG. 1 is a partial cross-sectional view of a gas turbine engine;
FIG. 2 is a flow diagram illustrating a method of manufacturing an aerodynamic element with a trailing edge in accordance with embodiments;
FIG. 3 is a perspective view of a turbine airfoil in accordance with embodiments;
FIG. 4 is an axial view of a ceramic core in accordance with embodiments;
FIG. 5A is a schematic side view illustrating a nominal turbine airfoil in accordance with embodiments;
FIG. 5B is an enlarged view of a trailing edge of the turbine airfoil of of FIG. 5A; and
FIG. 6 is a schematic diagram of a manufacturing machine for manufacturing a turbine airfoil in accordance with embodiments.

These and other advantages and features will become more apparent from the following description taken in conjunction with the drawings.

### DETAILED DESCRIPTION

A detailed description of one or more embodiments of the disclosed apparatus and method are presented herein by way of exemplification and not limitation with reference to the Figures.

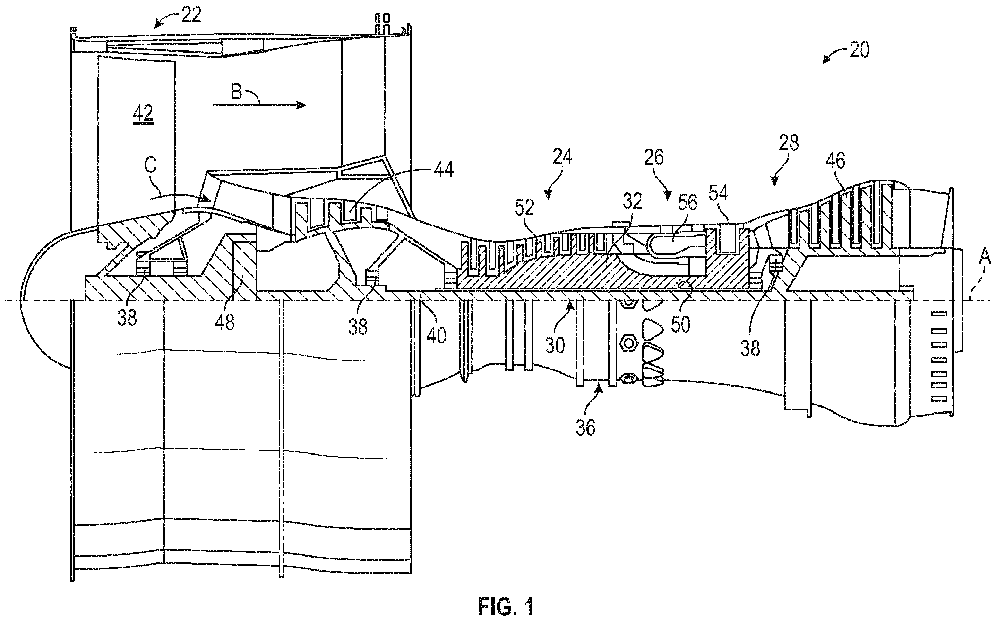

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 and then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary gas turbine engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in the gas turbine engine 20 between the high pressure compressor 52 and the high pressure turbine 54. The engine static structure 36 is arranged generally between the high pressure turbine 54 and the low pressure turbine 46. The engine static structure 36 further supports the bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 and then the high pressure compressor 52, is mixed and burned with fuel in the combustor 56 and is then expanded over the high pressure turbine 54 and the low pressure turbine 46. The high and low pressure turbines 54 and 46 rotationally drive the low speed spool 30 and the high speed spool 32, respectively, in response to the expansion. It will be appreciated that each of the positions of the fan section 22, compressor section 24, combustor section 26, turbine section 28, and fan drive gear system 48 may be varied. For example, geared architecture 48 may be located aft of the combustor section 26 or even aft of the turbine section 28, and the fan section 22 may be positioned forward or aft of the location of geared architecture 48.

The gas turbine engine 20 in one example is a high-bypass geared aircraft engine. In a further example, the gas turbine engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the gas turbine engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle.

The geared architecture 48 may be an epicyclic gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the gas turbine engine 20 is designed for a particular flight condition--typically cruise at about 0.8 Mach (274 m/s) and about 35,000 feet (10,668 meters). The flight condition of 0.8 Mach (274 m/s) and 35,000 ft (10,668 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

As will be described below, a method of manufacturing is provided and utilizes autonomous adaptive machining to accomplish trailing edge rounding of an aerodynamic element, such as a turbine airfoil, with the necessary tolerances for reliable aerodynamic benefit and process capability for producibility and affordability.

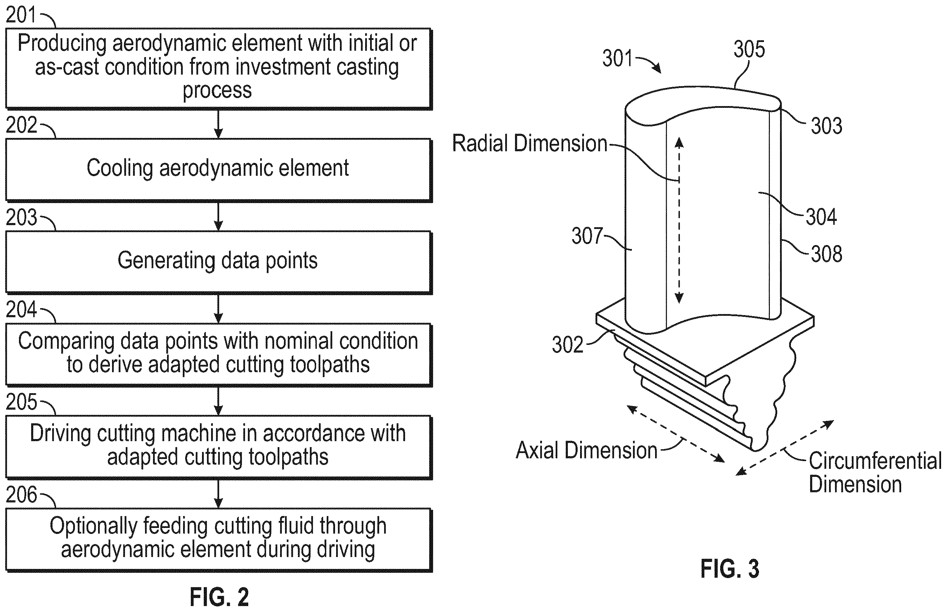

With reference to FIG. 2, a method of manufacturing an aerodynamic element with a trailing edge utilizing autonomous and/or adaptive machining is provided. As shown in FIG. 2, the method includes producing the aerodynamic element with an initial or as-cast condition from an investment casting process (201) and cooling the aerodynamic element produced from the investment casting process (202). The method further includes generating a predefined number of data points sufficient to characterize contours of the trailing edge (203) and comparing the data points to a nominal condition to derive transformation parameters that are applicable to cutting toolpaths to thereby adapt the cutting toolpaths to the initial or as-cast condition (204). In additioon, the method includes driving a cutting machine in accordance with the cutting toolpaths adapted to the initial or as-cast condition (205) and, optionally, feeding cutting fluid through the aerodynamic element during the driving (206). In accordance with embodiments, the cutting machine can include or be provided as one or more of a CNC machine, a ball endmill, an electro-dynamic machining (EDM) electrode and an electro-chemical machining (ECM) electrode.

With reference to FIG. 3 and in accordance with embodiments, the aerodynamic element with the initial or as-cast condition can include or be provided as a turbine airfoil 301 for use in, for example, the gas turbine engine 20 of FIG. 1. The turbine airfoil 301 has a root 302 and a tip 303 opposite the root 302, a pressure surface 304 and a suction surface 305 opposite the pressure surface 304 where the pressure surface 304 and the suction surface 305 extend from the root 302 to the tip 303, a leading edge 307 and a trailing edge 308 at leading and trailing sides of the pressure surface 304 and the suction surface 305, respectively.

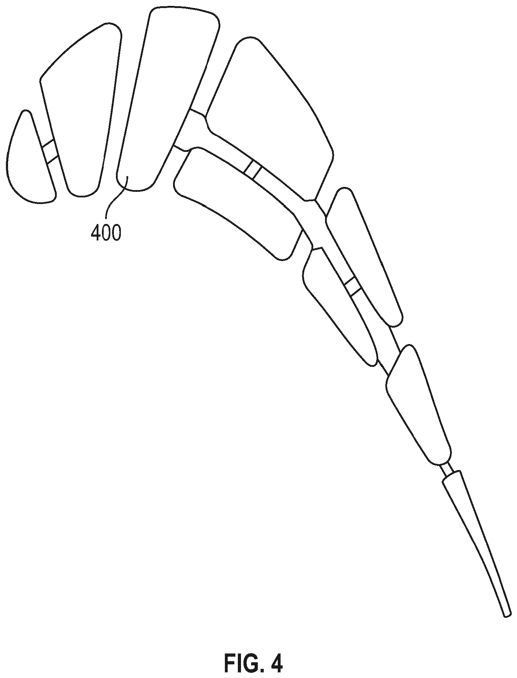

While the aerodynamic element has been described above as a turbine airfoil 301, it is to be understood that other embodiments are possible. For example, with reference to FIG. 4, the aerodynamic element could also be provided as one or more of turbine blade or vane, a fan, propeller or rotor blade, a ceramic core 400 used in the casting process of any of the above, etc. The following description will relate to the case in which the aerodynamic element is provided as the turbine airfoil 301. This is being done for clarity and brevity and should not be interpreted as limiting the disclosure in any way.

With continued reference to FIG. 3 and with additional reference back to FIG. 2, the generating of the predefined number of data points of operation 203 includes one or more of scanning, probing and measuring the turbine airfoil 301 with the initial or as-cast condition, the predefined number of data points are sufficient to characterize a position, size and shape of the turbine airfoil 301 with the initial or as-cast condition and the predefined number of data points are sufficient to characterize the contours of the trailing edge 308 relative to the position, the size and the shape of the turbine airfoil with the initial or as-cast condition.

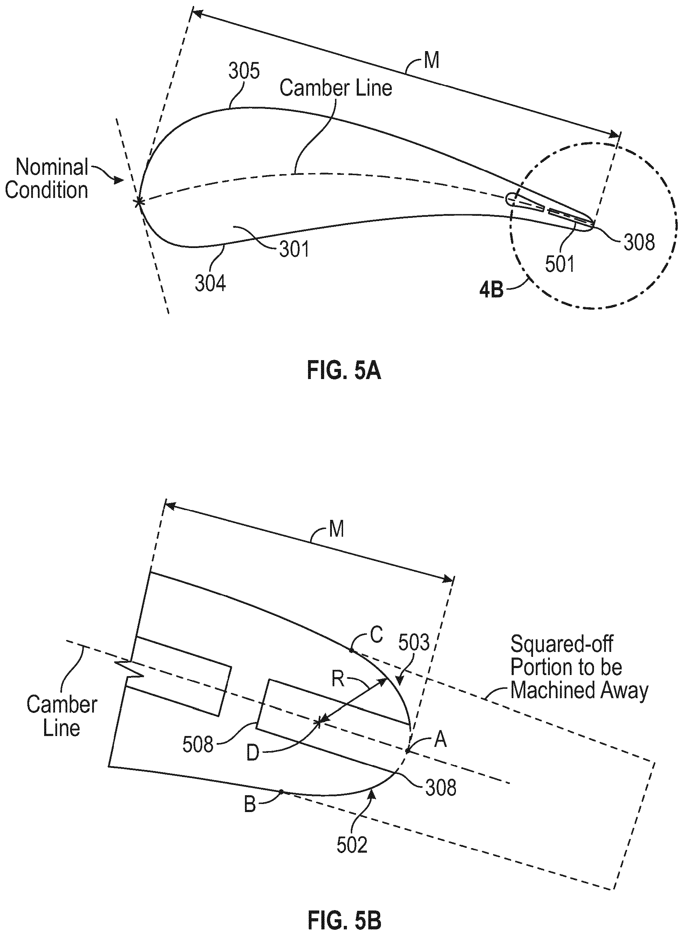

With continued reference to FIGS. 2 and 3 and with additional reference to FIGS. 5A and 5B, the initial or as-cast condition of the turbine airfoil 301 is characterized in that the turbine airfoil 301 has an offset discharge. In such cases, the turbine airfoil 301 can be formed to define a discharge cavity 501, through which coolant can be discharged from the turbine airfoil 301 during operations thereof, and this discharge cavity 501 is not in its correct or nominal position. That is, as shown in FIG. 5B, an initial shape of the trailing edge 308 of the turbine airfoil 301 with the initial or as-cast condition is generally squared-off with the expectation that the squared-off portion will be machined into a final edge-shape.

Where the turbine airfoil 301 has a nominal condition, as shown in FIG. 5A, the discharge cavity 501 should be aligned with the expected position of the trailing edge 308 in the final edge-shape (i.e., the discharge cavity 501 should be defined along the camber line of the turbine airfoil 301 proximate to the trailing edge 308). However, where the turbine airfoil 301 has the initial or as-cast condition characterized in that the turbine airfoil 301 has the offset discharge, the discharge cavity 501 is at least initially mis-aligned with the expected position of the trailing edge 308 in the final edge-shape (i.e., the discharge cavity 501 is not defined along the camber line proximate to the trailing edge 308).

Where the turbine airfoil 301 has the initial or as-cast condition characterized in that the turbine airfoil 301 has the offset discharge, the operation of generating the predefined number of data points of operation 203 (see FIG. 2) includes one or more of scanning, probing and measuring the turbine airfoil 301 with the offset discharge, wherein the predefined number of data points are sufficient to characterize a position, size and shape of the turbine airfoil 301 with the offset discharge and the predefined number of data points are sufficient to characterize the contours of the trailing edge 308 relative to the position, size and shape of the turbine airfoil with the offset discharge.

In accordance with embodiments, the number of the data points can be as little as three and up to a number which is substantially larger than three assuming sufficient computing resources are available. For operation 204 (see FIG. 2), the data points are comparable with corresponding data points of a turbine airfoil with the nominal condition so that transformation matrices for the data points can be derived and these transformation matrices are applied to the cutting toolpaths resulting in the cutting toolpaths being adapted toward correcting the offset discharge. Thus, the driving of the cutting machine of operation 205 (see FIG. 2) can be in accordance with the cutting toolpaths having been adapted toward correcting the offset discharge.

In accordance with embodiments, the cutting toolpaths adapted toward correcting the initial or as-cast condition can be defined along one or more of radial, axial and circumferential dimensions (see FIG. 3) and, as shown in FIG. 5B, each of the cutting toolpaths adapted toward correcting the offset discharge can include one or more passes on each side of the trailing edge 308 such that the trailing edge 308 has a curvature 502 and 503 at each side thereof (i.e., a pressure-side curvature 502 at the pressure surface 304 with a predefined radius of curvature and a suction-side curvature 503 at the suction surface 305 with a predefined radius of curvature).

In an exemplary case, as shown in FIG. 5B, point A can be determined from an intersection of the chord length M as defined by the nominal condition and the camber line, radius R is determined by the section thickness at point A, point D is determined by the radius R and the camber line and vectors DB and DC are determined by the radius R and the intersection with the airfoil surface. For more complex forms, the radius R can be defined to vary between the pressure surface 304 and the suction surface 305 (with different point Ds), one can define the final shape to include a "flat" occupying some distance surrounding point A, in which case, the vector DA will be less than radius R. Also, instead of a circular radius, the rounding can be elliptical. Thus, in accordance with further embodiments, the pressure-side curvature 502 can be one or more of spherical, elliptical and complex and/or variable along one or more of the radial, axial and circumferential dimensions (see FIG. 3) and the suction-side curvature 503 can be one or more of spherical, elliptical and complex and/or variable along one or more of the radial, axial and circumferential dimensions (see FIG. 3).

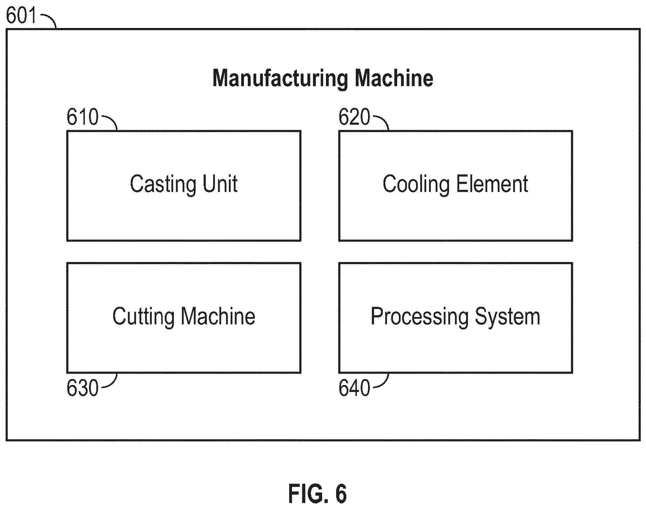

With reference to FIG. 6, a manufacturing machine 601 is provided for executing a method of manufacturing an aerodynamic element. The aerodynamic element can be any aerodynamic element including, but not limited to, the turbine airfoil 301 described above. The following description of the manufacturing machine 601 will relate to the case where the manufacturing machine is provided to manufacture the turbine airfoil 301 although it is to be understood that this is done for purposes of clarity and brevity.

The manufacturing machine 601 includes a casting unit 610, a cooling element 620, a cutting machine 630 and a processing system 640. The casting unit 610 is configured to execute an investment casting process to produce the turbine airfoil 301 with an as-cast condition. As described above, the as-cast condition is characterized in that the turbine airfoil 301 has an offset discharge. The cooling element 620 is configured to cool the turbine airfoil 301 and the cutting machine 630 is configured to machine the turbine airfoil 301 following the cooling by the cooling element 620. The processing system 640 is coupled to and disposed in signal communication with at least the cutting machine 630 and includes a processor, a memory unit, a servo control unit by which the processor can control operations of the cutting machine 630 and an input/output (I/O) bus by which the processor can communicate with the memory unit and the servo control unit. The memory unit has executable instructions stored thereon, which are readable and executable by the processor. When the executable instructions are read and executed by the processor, the executable instructions effectively cause the processor to operate as described herein.

For example, when the executable instructions are read and executed by the processor, the executable instructions effectively cause the processor and the processing system 640 as a whole to generate a predefined number of data points sufficient to characterize contours of the turbine airfoil 301 (i.e., the contours of the trailing edge 308 where the as-cast condition is characterized in that the turbine airfoil 301 has an offset discharge), to compare the data points to a nominal condition to derive transformation parameters applicable to cutting toolpaths to adapt the cutting toolpaths toward correcting the as-cast condition and to drive the cutting machine 630 in accordance with the cutting toolpaths adapted toward correcting the as-cast condition.

Benefits of the features described herein are the provision of turbine airfoils with rounded trailing edges that are produced when the turbine airfoils are cooled airfoils, with the associated benefits to performance and incidental shop part damage prevention. Additioinal benefits are that variations from investment casting processes (e.g., airfoil bow, lean, twist, wall thickness, etc.) are autonomously adjusted, the rounded profiles are controllable in three dimensions to tolerances of roughly 0.001", coat-down effects can be fed back into computer-aided modeling (CAM) routines for correction at the casting level and cost avoidance from manual production of rounded trailing edges.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of manufacturing an aerodynamic element (301) with a trailing edge (308), the method comprising:
casting (201) the aerodynamic element with an initial, as-cast condition;
wherein an initial shape of the trailing edge with the as-cast condition is generally squared-off with an expectation that the squared-off portion will be machined into a final edge-shape, and
wherein the aerodynamic element with the as-cast condition is formed to define a discharge cavity (501) through which coolant is discharged from the aerodynamic element during operations thereof, and the discharge cavity is at least initially mis-aligned with an expected position of the trailing edge in the final edge-shape;
cooling (202) the aerodynamic element;
generating (203) a predefined number of data points,
wherein the generating (203) of the predefined number of data points comprises one or more of scanning, probing and measuring the aerodynamic
element with the as-cast condition,
wherein the predefined number of data points are sufficient to characterize a position, size and shape of the aerodynamic element with the as-cast condition, and
wherein the predefined number of data points are sufficient to characterize contours of the trailing edge relative to the position, the size and the shape of the aerodynamic element with the as-cast condition;
comparing (204) the data points to a nominal condition of the aerodynamic element to derive transformation parameters applicable to cutting toolpaths to adapt the cutting toolpaths toward correcting the as-cast condition,
wherein when the aerodynamic element has the nominal condition, the discharge cavity is aligned with the expected position of the trailing edge in the final edge-shape; and
driving a cutting machine in accordance with the adapted cutting toolpaths.

2. The method as claimed in claim 1, wherein the aerodynamic element (301) comprises a turbine airfoil (301) having a root (302) and a tip (303), pressure and suction surfaces (304, 305) extending from the root to the tip.

3. The method as claimed in claim 1 or 2, wherein the aerodynamic element (301) comprises a ceramic core (400).

4. The method as claimed in any preceding claim, wherein the predefined number of data points is three.

5. The method as claimed in any preceding claim, wherein the cutting machine (630) comprises one or more of a CNC machine, a ball endmill, an electro-dynamic machining (EDM) electrode and an electro-chemical machining (ECM) electrode.

6. The method as claimed in claim 5, further comprising feeding (206) cutting fluid through the aerodynamic element (301) during the driving (205).

7. The method as claimed in any preceding claim, wherein the cutting toolpaths adapted toward correcting the as cast condition are defined along one or more of radial R, axial A and circumferential dimensions.

8. The method as claimed in any of claims 5, 6 or 7, wherein each of the cutting toolpaths adapted toward correcting the as cast condition comprises one or more passes on each side of the trailing edge (308) such that the trailing edge has a curvature at each side thereof.

9. The method as claimed in claim 8, wherein the curvature at each side is one or more of:
one or more of spherical, elliptical and complex; and
variable along one or more of radial R, axial A and circumferential dimensions.

10. A manufacturing machine (601) for manufacturing an aerodynamic element (301) configured to carry out the method according to any of the preceding claims, wherein the the manufacturing machine comprises:
a casting unit (610) configured to execute a casting process to produce (201) the aerodynamic element with the initial, as-cast condition;
a cooling element (620) configured to cool (202) the aerodynamic element;
a cutting machine (630) configured to machine the aerodynamic element following cooling by the cooling element; and
a processing system (640) configured to:
generate (203) the predefined number of data points sufficient to characterize contours of the aerodynamic element,
compare (204) the data points to a nominal condition to derive transformation parameters applicable to cutting toolpaths to adapt the cutting toolpaths toward correcting the as-cast condition, and
drive (205) the cutting machine in accordance with the cutting toolpaths adapted toward correcting the as-cast condition.

## Patentansprüche

1. Verfahren zum Herstellen eines aerodynamischen Elements (301) mit einer Hinterkante (308), wobei das Verfahren Folgendes umfasst:
Gießen (201) des aerodynamischen Elements in einem anfänglichen Gusszustand;
wobei ein anfänglicher Verlauf der Hinterkante in dem Gusszustand im Allgemeinen rechteckig mit einer Erwartung ist, dass der rechteckige Abschnitt in einen endgültigen Kantenverlauf bearbeitet wird, und
wobei das aerodynamische Element in dem Gusszustand dazu geformt ist, einen Abgabehohlraum (501) zu definieren, durch den während des Betriebs davon Kühlmittel aus dem aerodynamischen Element abgegeben wird, und der Abgabehohlraum mindestens anfänglich nicht mit einer erwarteten Position der Hinterkante in dem endgültigen Kantenverlauf ausgerichtet ist;
Kühlen (202) des aerodynamischen Elements;
Erzeugen (203) einer vordefinierten Anzahl von Datenpunkten,
wobei das Erzeugen (203) der vordefinierten Anzahl von Datenpunkten eines oder mehrere von Scannen, Sondieren und Messen des aerodynamischen Elements in dem Gusszustand umfasst, wobei die vordefinierte Anzahl von Datenpunkten ausreicht, um eine Position, Größe und einen Verlauf des aerodynamischen Elements in dem Gusszustand zu kennzeichnen, und
wobei die vordefinierte Anzahl von Datenpunkten ausreicht, um Konturen der Hinterkante relativ zu der Position, Größe und dem Verlauf des aerodynamischen Elements in dem Gusszustand zu kennzeichnen;
Vergleichen (204) der Datenpunkte mit einem Nominalzustand des aerodynamischen Elements, um Transformationsparameter abzuleiten, die auf Schneidewerkzeugwege anwendbar sind, um die Schneidewerkzeugwege zum Korrigieren des Gusszustands anzupassen,
wobei, wenn das aerodynamische Element den Nominalzustand aufweist, der Abgabehohlraum mit der erwarteten Position der Hinterkante in dem endgültigen Kantenverlauf ausgerichtet ist; und
Antreiben einer Schneidemaschine gemäß den angepassten Schneidewerkzeugwegen.

2. Verfahren nach Anspruch 1, wobei das aerodynamische Element (301) einen Turbinentragflügel (301), der eine Wurzel (302) und eine Spitze (303) aufweist, Druck- und Saugflächen (304, 305), die sich von der Wurzel bis zu der Spitze erstrecken, umfasst.

3. Verfahren nach Anspruch 1 oder 2, wobei das aerodynamische Element (301) einen Keramikkern (400) umfasst.

4. Verfahren nach einem der vorhergehenden Ansprüche, wobei die vordefinierte Anzahl von Datenpunkten drei ist.

5. Verfahren nach einem der vorhergehenden Ansprüche, wobei die Schneidemaschine (630) eine oder mehrere von einer CNC-Maschine, einem Kugelschaftfräser, einer Elektrode zur elektrodynamischen Bearbeitung (EDM) und einer Elektrode zur elektrochemischen Bearbeitung (ECM) umfasst.

6. Verfahren nach Anspruch 5, ferner umfassend Zuführen (206) von Schneidfluid durch das aerodynamische Element (301) während des Antreibens (205).

7. Verfahren nach einem der vorhergehenden Ansprüche, wobei die Schneidewerkzeugwege, die zum Korrigieren des Gusszustands angepasst sind, entlang einer oder mehrerer von radialen R-, axialen A- und Umfangsabmessungen definiert sind.

8. Verfahren nach einem der Ansprüche 5, 6 oder 7, wobei jeder der Schneidewerkzeugwege, die zum Korrigieren des Gusszustands angepasst sind, einen oder mehrere Durchgänge an jeder Seite der Hinterkante (308) derart umfasst, dass die Hinterkante an beiden Seiten davon eine Krümmung aufweist.

9. Verfahren nach Anspruch 8, wobei die Krümmung an jeder Seite eines oder mehrere von Folgendem ist:
einem oder mehreren von sphärisch, elliptisch und komplex; und
variabel entlang einer oder mehreren von radialen R-, axialen A- und Umfangsabmessungen.

10. Fertigungsmaschine (601) zum Herstellen eines aerodynamischen Elements (301), die dazu konfiguriert ist, das Verfahren nach einem der vorhergehenden Ansprüche durchzuführen, wobei die Fertigungsmaschine Folgendes umfasst:
eine Gusseinheit (610), die dazu konfiguriert ist, einen Gussprozess auszuführen, um das aerodynamische Element in dem anfänglichen Gusszustand zu produzieren (201);
ein Kühlelement (620), das dazu konfiguriert ist, (202) das aerodynamische Element zu kühlen;
eine Schneidemaschine (630), die dazu konfiguriert ist, das aerodynamische Element nach dem Kühlen durch das Kühlelement zu bearbeiten; und
ein Verarbeitungssystem (640), das dazu konfiguriert ist:
die vordefinierte Anzahl von Datenpunkten zu erzeugen (203), die ausreicht, um Konturen des aerodynamischen Elements zu kennzeichnen,
die Datenpunkte mit einem Nominalzustand zu vergleichen (204), um Transformationsparameter abzuleiten, die auf Schneidewerkzeugwege anwendbar sind, um die Schneidewerkzeugwege zum Korrigieren des Gusszustands anzupassen, und
die Schneidemaschine gemäß den Schneidewerkzeugwegen, die zum Korrigieren des Gusszustands angepasst sind, anzutreiben (205).

## Revendications

1. Procédé de fabrication d'un élément aérodynamique (301) doté d'un bord de fuite (308), le procédé consistant à :
mouler (201) l'élément aérodynamique à un état brut de coulée initial ;
dans lequel une forme initiale du bord de fuite à l'état brut de coulée est généralement carrée dans l'attente que la partie carrée soit usinée en une forme de bord finale, et
dans lequel l'élément aérodynamique à l'état brut de coulée est formé pour définir une cavité d'évacuation (501) à travers laquelle le liquide de refroidissement est évacué de l'élément aérodynamique pendant les opérations associées, et la cavité d'évacuation présente au moins initialement un défaut d'alignement avec une position attendue du bord de fuite dans la forme de bord finale ;
refroidir (202) l'élément aérodynamique ;
générer (203) un nombre prédéfini de points de données,
dans lequel la génération (203) du nombre prédéfini de points de données comprend une ou plusieurs étapes parmi le balayage, le sondage et la mesure de l'élément aérodynamique dans l'état brut de coulée,
dans lequel le nombre prédéfini de points de données est suffisant pour caractériser une position, une taille et une forme de l'élément aérodynamique à l'état brut de coulée, et
dans lequel le nombre prédéfini de points de données est suffisant pour caractériser les contours du bord de fuite par rapport à la position, à la taille et à la forme de l'élément aérodynamique à l'état brut de coulée ;
comparer (204) les points de données à un état nominal de l'élément aérodynamique pour en déduire les paramètres de transformation applicables aux trajets d'outils de coupe afin d'adapter les trajets d'outils de coupe à la correction de l'état brut de coulée,
dans lequel, lorsque l'élément aérodynamique se trouve à l'état nominal, la cavité **d'évacuation** est alignée avec la position attendue du bord de fuite dans la forme de bord finale ; et
actionner une machine de coupe en fonction des trajets d'outils de coupe adaptés.

2. Procédé selon la revendication 1, dans lequel l'élément aérodynamique (301) comprend une surface portante de turbine (301) ayant une emplanture (302) et une pointe (303), des surfaces de pression et **d'aspiration** (304, 305) se prolongeant de l'emplanture à la pointe.

3. Procédé selon la revendication 1 ou 2, dans lequel l'élément aérodynamique (301) comprend un noyau en céramique (400).

4. Procédé selon une quelconque revendication précédente, dans lequel le nombre prédéfini de points de données est de trois.

5. Procédé selon une quelconque revendication précédente, dans lequel la machine de coupe (630) comprend une ou plusieurs machines parmi une machine CNC, une fraise à bout hémisphérique, une électrode d'usinage électrodynamique (EDM) et une électrode d'usinage électrochimique (ECM).

6. Procédé selon la revendication 5, comprenant également l'alimentation (206) en fluide de coupe à travers l'élément aérodynamique (301) pendant l'actionnement (205).

7. Procédé selon une quelconque revendication précédente, dans lequel les trajets d'outils de coupe adaptés à la correction de l'état brut de coulée sont définis le long d'une ou plusieurs des dimensions radiales R, axiales A et circonférentielles.

8. Procédé selon l'une quelconque des revendications 5, 6 ou 7, dans lequel chacun des trajets d'outils de coupe adaptés à la correction de l'état brut de coulée comprend un ou plusieurs passages de chaque côté du bord de fuite (308) de telle sorte que le bord de fuite présente une courbure de chaque côté de celui-ci.

9. Procédé selon la revendication 8, dans lequel la courbure de chaque côté présente une ou plusieurs caractéristiques parmi les suivantes :
une ou plusieurs caractéristiques parmi des caractéristiques sphériques, elliptiques et complexes ; et
des caractéristiques variables le long d'une ou plusieurs des dimensions radiales R, axiales A et circonférentielles.

10. Machine de fabrication (601) pour la fabrication d'un élément aérodynamique (301) configurée pour mettre en œuvre le procédé selon l'une quelconque des revendications précédentes, dans laquelle la machine de fabrication comprend :
une unité de coulée (610) configurée pour exécuter un processus de coulée pour produire (201) l'élément aérodynamique à l'état brut de coulée initial ;
un élément de refroidissement (620) configuré pour refroidir (202) l'élément aérodynamique ;
une machine de coupe (630) configurée pour usiner l'élément aérodynamique après refroidissement par l'élément de refroidissement ; et
une unité de traitement (640) configurée pour :
générer (203) le nombre prédéfini de points de données suffisant pour caractériser les contours de l'élément aérodynamique,
comparer (204) les points de données à un état nominal pour en déduire les paramètres de transformation applicables aux trajets d'outils de coupe afin d'adapter les trajets d'outils de coupe à la correction de l'état brut de coulée, et
actionner (205) la machine de coupe en fonction des trajets d'outils de découpe adaptés à la correction de l'état brut de coulée.
